# EUROPÄISCHE PATENTSCHRIFT

(11) **EP 0 812 401 B1**
(45) Veröffentlichungstag und Bekanntmachung des Hinweises auf die Patenterteilung: **16.12.1998**
(21) Anmeldenummer: 96904081.5
(22) Anmeldetag: 14.02.1996
(51) Int. Cl.: F16K 47/02

(54) **SANITÄRES WASSERVENTIL**
SANITARY WATER VALVE
ROBINET D'EAU SANITAIRE

(30) Priorität: 24.02.1995 AT 344/95
(43) Veröffentlichungstag der Anmeldung: 17.12.1997
(73) Patentinhaber: IDEAL-STANDARD GMBH, 53121 Bonn (DE)
(72) Erfinder: MÖNCH, Heiner, D-54344 Kenn (DE)
(74) Vertreter: Puchberger, Rolf, Dipl. Ing.
(86) Internationale Anmeldenummer: EP9600627
(87) Internationale Veröffentlichungsnummer: WO9626379

(56) Entgegenhaltungen:
- EP-A- 0 018 438
- EP-A- 0 120 815
- DE-C- 2 660 898

## Beschreibung

Sanitäre Wasserarmaturen bestehen hauptsächlich aus einem Grundkörper, der als Unterputzkörper oder als Aufputzkörper ausgebildet sein kann, einer Kartusche, die auf den Grundkörper montiert ist und einem Gehäuse sowie einem oder mehreren Bedienungsgriffen, die mit der Kartusche in Eingriff stehen und unter Umständer auch das Gehäuse in seiner Position sichern.

Die vorliegende Anmeldung betrifft ein sanitäres Wasserventil, insbesondere Mischventil, mit einem Einsatzteil für den Anschluß einer die Steuerelemente aufnehmenden, in einem Gehäuse vorgesehenen Kartusche an die Wasserzuleitungen, wobei das Einsatzteil im Gehäuse angeordnet ist und Durchtrittskanäle für das warme und kalte Wasser aufweist. Ein solches Wasserventil mit Einsatzteil ist z.B. in der DE-C-31 19 313 geoffenbart.

Beim raschen Schließen und Öffnen von Ventilen entstehen Geräusche erheblicher Lautstärke. Da die Lärmschutzvorschriften in vielen Ländern einen niedrigen Lärmpegel vorschreiben, wurden schon zahlreiche Bemühungen unternommen, Wasserschalldämpfer zu entwickeln, um sie in sanitäre Systeme einzubauen. So ist es z.B. bekannt, in einem Rohr einen Einsatz aus elastischem Material einzusetzen, und zwar in einen Stützring.

Aus der WO 89/01585 ist ein Mischventil bekannt, bei dem in eine der Ventilscheiben der Kartusche ein Strömungsführungsstück eingesetzt ist, die Abmessungen der Durchtrittskanäle in den Ventilscheiben müssen dazu natürlich geeignet gewählt werden.

In dem Mischventil gemäß der EP-A-018 438 ist zur Geräuschdämpfung in den Oberflächenkanal der obersten Ventilscheibe ein Sieb eingesetzt. Bei dem Ventil gemäß der DE-C-26 60 898 sind die Geräuschdämpfer ebenfalls in die Kartusche und zwar in die Durchflußöffnungen einer Ventilscheibe eingesetzt. Das Einsetzen der Geräuschdämpfer direkt in den Fließweg erfordert eine besondere Dimensionierung des Oberlächenkanals bzw. der Durchflußkanäle um gleiche Strömungsbedingungen wie bei herkömmlichen Ventilen zu erhalten. Bei Verstopfung oder Verkalkung der siebartigen Geräuschdämpfer ist ein Austausch bei Anordnung in der Kartusche schwierig bzw. unmöglich. Ein Austausch der ganzen Kartusche ist andererseits sehr kostspielig.

Bei der Armatur gemäß der CH-A-628 967 ist ein Dämpfer im Wasserlauf vor eine Batterie geschalten. Der Dämpfer ist einstückig aus dauerelastischem Material und weist Durchtrittskanäle auf. Er ist in einer Sackbohrung im Gehäuse eingesetzt, die Zulaufleitungen für Kalt- und Warmwasser müssen entsprechend mit dem Durchtrittskanälen verbunden werden, d.h. die Anschlußgeometrie muß speziell für diese Anordnung angepaßt werden.

Aufgabe der vorliegenden Erfindung ist es eine Möglichkeit zu finden, eine Geräuschdämpfung herbeizuführen, ohnen die Elemente der Kartusche oder die Anschlüsse der Armatur ändern zu müssen.

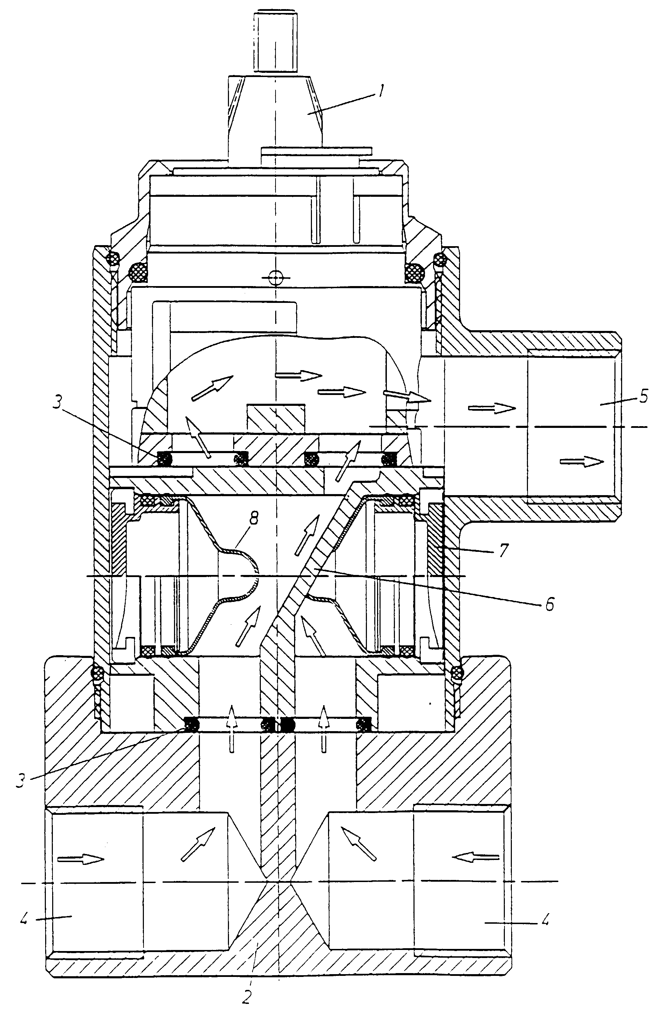

Erfindungsgemäß wird jetzt bei dem eingangs erwähnten Mischventil vorgeschlagen, daß die Wandungen der Durchtrittskanäle des Einsatzteiles Durchbrüche aufweisen, in die Geräuschdämper einsteckbar sind. Dadurch wird weder die Kartusche noch die Anschlußgeometrie der Armantur verändert. Bringt man die Geräuschdämpfer im direkten Wasserzufluß bei Unterputzarmaturen an, so ergibt sich eine Einsparung von Messing am Grundkörper, da keine zusätzlichen Aufnahmebohrungen notwendig sind, und zwar werden die Geräuschdämper in die Wandungen, d.h. in die Wasserwege zur Kartusche, eingestetzt. Die Erfindung wird nun anhand der Zeichnung näher beschrieben.

Das Mischventil hat den üblichen Aufbau, nämlich ein Batteriekörper 2 besitzt einen Zulauf 4 und einen Ablauf 5, von wo dann das Wasser einer üblichen Entnahmestelle, also z.B. einem Badewannenauslaß oder einer Brause zugeführt wird. Zur Steuerung der Wasserströme ist eine Kartusche 1 vorhanden, die mit einem Bedienungshebel verbunden werden kann und über die sowohl der Kaltwasser- als auch der Warmwasserdurchtritt gesteuert werden kann. Der Aufbau einer derartigen Kartusche ist allgemein bekannt und braucht hier nicht mehr wiederholt werden. Im Wasserweg sind ein oder mehrere Geräuschdämpfer 8 von einem Einsatzteil 6 gehalten. Es ist ferner ein Dämperträger 7 vorhanden und an den Verbindungsstellen der einzelnen Teile sind Abdichtungen 3 vorhanden.

Bei herkömmlichen Ausführungsformen, insbesondere bei Unterputzarmaturen, befinden sich die Geräuschdämpfer 8 zwischen dem Unterputzgrundkörper und den Zulaufleitungen 4 für das Wasser. Dadurch vergrößert sich das Bauvolumen, was wiederum größere Unterputzkästen und somit auch größere Rosetten bedingt. Durch die vorliegende Erfindung wird dies vermieden, das Bauvolumen bei Unterputzarmaturen ist hier geringer und die Abdeckrosetten können deshalb auch kleiner sein. Günstig ist auch, daß die Erfindung bei Geräuschproblemen auch bei eingebauten Körpern vorgesehen werden kann, d.h. die Erfindung ist nachrüstbar.

Eine Vertauschung der Wasserwege, also von kalt auf warm bzw. umgekehrt, dies tritt manchmal bei Unachtsamkeit der Installateure auf, stellt kein Problem mehr dar. Bei der Erfindung kann durch einfaches Umstecken der Einsätze, welche die Geräuschdämpfer aufnehmen, und bei entsprechender Verlegung der Wasserwege, z.B. schräger Verlauf der Innenwandung der Wasserweg kalt warm vertauscht werden, so daß also bei Falschinstallationen ein normaler Anschluß der Wasserströme zur Kartusche und damit der richtige Wasserfluß wieder hergestellt werden kann. Der Vorteil liegt darin, daß die normale Bedienbarkeit des Wasserventiles, insbesondere auch bei einer Mischbatterie gegeben ist.

Durch die Erfindung ist es auch möglich, geräuschgedämpfte S-Anschlüsse bei Aufputzarmaturen einzusparen.

Eine Dämpfung ist auch gewährleistet bei Verwendung von alten, nichtgedämpften S-Anschlüssen, z.B. bei Renovierungen, wobei dann keine Demontage notwendig ist, wenn man zum Anpassen der Kartusche an dem Grundkörper einen Einsatzteil verwendet, der die Geräuschdämpfer aufnimmt. Der Einsatzteil kann ein Messingteil sein, und zwar mit Öffnungen in den Wasserkanälen die zur Kartusche führen für die Aufnahme der Geräuschdämpfer, die aber auch beispielsweise in einem getrennten Einsatzstück angeordnet sein können, welches in den Einsatzteil einsteckbar ist. Einsatzteil und Einsatzstück können, wie die Zeichnung zeigt, einstückig hergestellt sein, es ist also bei alten, nichtgedämpften S-Anschlüssen, wie bei Renovierungen, keine Demontage und kein Austausch der S-Anschlüsse notwendig, so daß bei diesen alten Armaturen auch keine Beschädigungen an den Anschlüssen auftreten können.

Bei der Erfindung sind die Geräuschdämpfer leicht austauschbar, da keine Demontage an den S-Anschlüssen stattfinden müssen.

Das Einsatzstück oder der gesamte Einsatzteil kann aus Kunststoff hergestellt werden, so daß eine kostengünstige Fertigung gegeben ist.

Man kann sich auch vorstellen, daß die Erfindung bei Thermostatbatterien zur Anwendung kommt. Bei Thermostatbatterien sind absperrbare S-Anschlüsse bei Aufputzversionen vorgesehen, so daß kein Platz für Geräuschdämpfer vorhanden ist, jedoch kann die Erfindung entsprechend angewendet werden, indem sie vor der Thermostatsteuereinheit vorgesehen wird.

## Patentansprüche

1. Sanitäres Wasserventil, insbesondere Mischventil, mit einem Einsatzteil für den Anschluß einer die Steuerelemente aufnehmenden, in einem Gehäuse vorgesehenen Kartusche an die Wasserzuleitungen, wobei das Einsatzteil im Gehäuse angeordnet ist und Durchtrittskanäle für das warme und kalte Wasser aufweist, dadurch gekennzeichnet, daß die Wandungen der Durchtrittskanäle des Einsatzteiles (6) Durchbrüche aufweisen, in die Geräuschdämpfer (8) einsteckbar sind.

2. Sanitäres Wasserventil nach Anspruch 1, dadurch gekennzeichnet, daß die Geräuschdämpfer in einem Einsatzstück gehalten sind, welches in den Einsatzteil einsteckbar ist.

3. Sanitäres Wasserventil nach den Ansprüchen 1 und 2, dadurch gekennzeichnet, daß das Einsatzstück mit dem Einsatzteil (6) einstükkig ausgebildet ist und gleichzeitig den Einsatzteil (6) bildet.

## Claims

1. Sanitary water valve, in particular mixer valve, having an insert part for the connection of a cartridge, which accommodates the control elements and is provided in a housing, to the water pipes, the insert part being arranged in the housing and having passage ducts for the hot and cold water; characterized in that the walls of the passage ducts of the insert part (6) have gaps into which sound dampers (8) can be inserted.

2. Sanitary water valve according to Claim 1, characterized in that the sound dampers are held in an insert piece which can be inserted into the insert part.

3. Sanitary water valve according to Claims 1 and 2, characterized in that the insert piece is of integral design with the insert part (6) and, at the same time, forms the insert part (6).

## Revendications

1. Robinet d'eau sanitaire, en particulier robinet mélangeur, avec une partie insert pour le raccordement aux conduites d'amenée d'eau d'une cartouche recevant les éléments de commande, prévue dans un carter, la partie insert étant disposée dans le carter et présentant des canaux de passage destinés à l'eau chaude et à l'eau froide, caractérisé en ce que les parois des canaux de passage de la partie insert (6) présentent des percements dans lesquels peuvent être enfilés des amortisseurs de bruit (8).

2. Robinet d'eau sanitaire selon la revendication 1, caractérisé en ce que les amortisseurs de bruit sont maintenus dans une pièce d'insert qui est susceptible d'être enfilée dans la partie insert.

3. Robinet d'eau sanitaire selon les revendications 1 et 2, caractérisé en ce que la pièce d'insert est réalisée d'une seule pièce avec la partie insert (6) et constitue simultanément la partie insert (6).
